# EUROPEAN PATENT APPLICATION

(11) **EP 4 696 885 A2**
(43) Date of publication of application: **18.02.2026**
(21) Application number: 25218715.8
(22) Date of filing: 28.09.2023
(51) Int. Cl.: F03D 13/20

(54) **DAMPENING SYSTEM AND METHOD FOR WIND TURBINE INSTALLATION**

(30) Priority: 28.09.2022 EP 22198502
(62) Divisional of application: 23782224.2
(71) Applicant: Siemens Gamesa Renewable Energy A/S, 7330 Brande (DK)
(72) Inventor: Mose Boldsen, Jonas, 8700 Horsens (DK); Nissen Christensen, Nicolaj, 8200 Århus N (DK); Storgaard, Søren, 8722 Hedensted (DK); Enevoldsen, Peder Bay, 7100 Vejle (DK)
(74) Representative: SGRE-Association

(57) **Abstract**

The invention relates to a Damping system (1) for damping a movement of a tower (2) of a wind turbine (3), comprising a string (4) for being attached to the tower (2) for applying a pulling force to the tower (2). The damping system (1) further comprises a pulling device (5) for providing a defined pulling force onto the string (4) and a controlling device (6) for controlling the pulling device (5). The invention further relates to a method for damping a movement of a tower (2) of a wind turbine (3).

## Description

The present invention relates to a damping system for damping a movement of a tower of a wind turbine, especially during an installation process of the wind turbine, such as nacelle landing or rotor blade landing. The invention also relates to a method for damping a movement of a tower of a wind turbine.

Wind turbine towers are exposed to environmental influences, which can cause the tower to move, like swinging, vibrating, or the like. Excitations of the tower can be wind-induced vibrations such as interference galloping (IG) or vortex induced (VIV). Offshore water can also cause vibrations, either by current driven VIV or from waves acting on a substructure of the wind turbine.

When installing components of a wind turbine, such as a nacelle landing on the tower or a rotor blade landing on a hub of the wind turbine, movements of the tower of the wind turbine can cause difficulties, especially for aligning the components and for keeping the components aligned during a fixation process.

Moreover, for such installation processes, large auxiliary vehicles, like onshore cranes or offshore crane vessels, are normally used. Since the operation of these vehicles is very cost-intensive, it is a general object of the wind turbine industry to reduce the installation duration of such wind turbine components. For this purpose, a plurality of systems and methods has been developed.

For onshore wind turbines, anchoring of the tower is a well-known method for reducing the movement of the tower. By means of a string in combination with an anchor device, the tower is secured to the ground. By tensioning the string, a stiffness of the tower is increased and, thus, the movement of the tower can be reduced. Moreover, by arranging the rope to provide friction when pulled back and forth by the tower, the tower movement can be dampened as well. A disadvantage of an anchoring system is that the positive effect of reducing and damping the movement of the tower is very limited. Moreover, for offshore applications, such systems are only implementable with enormous effort and, therefore, for economic reasons, not advisable.

Another technique used for onshore and offshore wind turbines is a mass damper system, which is put on the top of the tower during installation. Such a mass damper system can be either passive or active. Furthermore, it can be designed as either a rotating or linear arrangement. A disadvantage of using such active mass systems is that it requires an extra lift by the crane and thereby increases the installation time. Another disadvantage is that the active mass damper systems need advanced controllers, which are rather expensive.

A different method for improving the alignment of a rotor blade with a hub is known from the industry. A center part of the rotor blade is connected to a lifting string of a crane, while alignment strings of an alignment system are attached to the rotor blade from both sides of the center part. By lifting the rotor blade and defined operation of the alignment strings, an orientation of the rotor blade with respect to the hub can be controlled precisely. Such a system requires a sophisticated control device and generates comparatively high costs. Documents WO 2021 / 121 501 A1 and WO 2021 / 175 398 A1 disclose further methods for damping the movement of a wind turbine tower.

It is therefore the object of the present invention to eliminate or at least partially eliminate the disadvantages described above in the case of an installation of a wind turbine. In particular, it is the object of the present invention to create a damping system and a damping method, which provide reduced installation times of components of the wind turbine, such as the landing of the nacelle on the tower or the rotor blades on the hub, in a simple and inexpensive manner.

The above object is achieved by the claims. Accordingly, the problem is solved by a damping system for damping a movement of a tower of a wind turbine with the features of the independent claim 1 and by a method for damping a movement of a tower of a wind turbine with the features of the subordinate claim 7. Further features and details of the invention emerge from the sub claims, the description, and the drawings. Features and details that are described in connection with the damping system for damping a movement of a tower of a wind turbine according to the first aspect of the invention naturally also apply in connection with the method for damping a movement of a tower of a wind turbine according to the second aspect of the invention and vice versa, so that with regard to the disclosure of the individual aspects of the invention, reference is or can always be made to each other.

According to a first aspect of the invention, the object is achieved by a damping system for damping a movement of a tower of a wind turbine. The damping system comprises a string that is attached to the tower for applying a pulling force to the tower. According to the invention, the damping system further comprises a pulling device for providing a defined pulling force onto the string and a controlling device for controlling the pulling device. Furthermore, the pulling device comprises a hydraulic pulling system for providing the pulling force.

The string can be configured as a rope, a wire, a belt, or the like, or a combination thereof. For securing the string to the tower, the string can be configured to be wound around the tower. Alternatively or additionally, the damping system can comprise a holding element, which can be attached to the tower. The holding element is configured for being attached to the string. Alternatively, the string can be already attached to the holding element. The holding element can be configured as a loop to be wound around the tower.

The string is configured to provide a pulling force to the tower. Therefore, it is preferred that the string be configured for forces of at least 50 kN, more preferred of at least 500 kN and more preferred of at least 1 MN. Furthermore, it is preferred that the string have a comparatively high stiffness to avoid movement of the tower due to elastic properties of the string.

The pulling device is connected to the string to provide the defined pulling force onto the string. Preferably, the pulling device comprises an anchoring device for anchoring the pulling device to the ground. For onshore applications, it is preferred that the pulling device have a device weight that is significantly higher than the pulling force to be provided. Thus, the pulling device can remain in a fixed position during the installation procedure. The pulling device can be configured as a transversal pulling device, e.g. with a pulling piston, rod, or the like, a rotational pulling device, e.g. as a winch, or a combination thereof.

The controlling device is configured to control the pulling device. Within the limits of the present invention, controlling the pulling device preferably means controlling it in a way that the defined pulling force is provided. It is further preferred that controlling also means that the defined pulling force can be maintained or adjusted, especially with respect to a movement of the tower. The controlling device may e.g. be a programmable logic controller (PLC) having an input sensor signal of the movements of the tower and an output signal to the pulling device.

The damping system is preferably configured to hold the string tight with a predetermined first force, e.g. between 10 and 30 kN, when the tower moves towards the string. The damping system is preferably configured to pull the string with the predetermined pulling force, e.g. between 150 and 400 kN, when the tower moves away from the string. Thus, the movement of the tower can be dampened and thereby reduced.

The pulling device comprises the hydraulic pulling system for providing the pulling force. The hydraulic pulling system comprises a hydraulic actuator. The hydraulic actuator can comprise a hydraulic cylinder, a piston, and/or a hydraulic motor, or winch, or the like. This has the advantage that in a simple and inexpensive way, the defined pulling force can be provided in an efficient and reliable way.

A damping system according to the invention has the advantage over conventional damping systems that, in a simple and inexpensive way, the movement of a tower of a wind turbine can be dampened. Thus, the installation time for components of the wind turbine, such as a nacelle to the tower, rotor blades to the hub or the like, can be reduced because, due to the reduced movement of the tower, alignment process times can be shortened. This has the further advantage that usage times of expensive auxiliary vehicles, such as crane vessels, can be reduced and costs can be saved.

According to a preferred further development of the invention, the damping system comprises a sensing device for sensing a movement of the tower, wherein the controlling device is configured for controlling the pulling device with respect to a or the sensed movement of the tower, respectively. The sensing device can be configured for being mounted onto the tower, e.g. onto the top of the tower. Alternatively, the sensing device can be configured for being operated spaced apart from the tower, e.g. for sensing a movement of the tower from a distance, e.g. by optical and/or mechanical means. Preferably, the sensing device is configured to sense the movement of several towers from one location without the need to relocate the sensing device. Within the limits of the invention, sensing can be understood as measuring, detecting, determining or the like. The sensing device is preferably configured for sensing a movement speed of the tower. This has the advantage that in a simple and inexpensive way, the defined pulling force can be better provided with respect to reducing the movement of the tower.

It is preferred according to the invention that the sensing device is configured for sensing an acceleration of the tower, wherein the controlling device is configured for controlling the pulling device with respect to the sensed acceleration of the tower. By means of sensing the acceleration of the tower, an extent of the movement of the tower can be better predicted. Furthermore, the effects of the applied pulling force of the pulling device on the movement of the tower can be better determined. Thus, the pulling force can be optimized to reduce the movement of the tower more efficiently. This has the advantage that, in a simple and inexpensive way, the damping action of the damping system for damping the movement of the tower can be further improved.

More preferred, the damping system further comprises a relay, wherein the controlling device is configured for operating the relay with respect to the sensed movement of the tower. Preferably, the damping system comprises a plurality of relays. The controlling device can be configured to set an internal relay on or off in dependence on the sensor input signal. When the internal relay is on then a device relay of the pulling device is activated, and when the internal relay is off, the device relay is not activated, or vice versa. This has the advantage that in a simple and inexpensive way, the pulling device can be easily controlled by the control device.

In a particularly preferred embodiment, the controlling device is configured for operating the relay with respect to a predicted movement of the tower based on the sensed movement of the tower. The controlling device is configured to predict the movement of the tower by analyzing the sensed movement of the tower, e.g. when the acceleration of the tower movement increases, the controlling device can determine that a driving force for the movement of the tower is comparatively high and that from that time point, a further movement of the tower in a particular direction is expected. The controlling device is further configured to operate the relay and thereby control the pulling device to adjust the pulling force with respect to the expected movement of the tower in advance. This has the advantage that in a simple and inexpensive way, the reaction of the pulling device to the movement of the tower can be improved, wherein an offset between the tower movement and the action of the pulling device for damping the movement of the tower can be reduced. Thus, the movement of the tower can be dampened in a more efficient way.

According to a preferred embodiment of the invention, the relay is connected to at least one valve for operating the hydraulic pulling system. By operating the valve, pressurized hydraulic fluid, provided by a hydraulic motor-pump unit of the pulling device, can be provided to the hydraulic actuator in a defined way. Preferably, the valve is configured as a two-way valve for selectively providing the hydraulic fluid to a high-pressure hydraulic circuit and a low-pressure hydraulic circuit. The controlling device is preferably configured for setting the valve for the low-pressure circuit to tighten the string when the tower is moving towards the string and for setting the valve for the high-pressure circuit when the tower moves away from the string to provide a higher pulling force. This has the advantage that, in a simple and inexpensive way, the defined pulling force can be provided in an efficient and reliable way.

In a particularly preferred embodiment, the damping system further comprises a winch, which during blade installation be pulled in one or more strings connected to the tower to ensure that the strings are kept tight. Additionally, at least one hydraulic actuator is further connected to the winch by a moveable sliding means on a main frame (frame support). The sliding means may be a sled. By actuating one or more hydraulic actuators (e.g. hydraulic cylinder actuators), the movements of the tower are dampened by pulling forces created by the hydraulic actuators.

By having a winch combined with hydraulic cylinders it is ensured that the string is kept tight, as the winch may be able to quickly pull in several meters of string. A hydraulic cylinder or a plurality of hydraulic cylinders may be used to generate the pull force of the string when the string is kept tight by the winch.

According to a further development of the invention, the damping system is mounted on the deck of a jack-up vessel in relation to offshore blade installation. The damping system can also be used in relation to onshore blade installation. By damping the turbine tower oscillations during blade installation, it increases the weather window, allowing to install wind turbines in higher wind speed situation.

According to another preferred embodiment of the invention, a tower is connected from the installation vessel (or onshore on the ground) through strings and the damping is provided by having a higher tension in the string as the tower oscillates away from the vessel whilst reducing the tension as the tower may move towards the vessel. Alternating between these tension forces with the tower frequency, the tower amplitude is reduced. It is the degree of restraining this displacement that may impose loads on the damping system.

According to a further embodiment of the invention, the damping system is stored inside a container to facilitate the storage of the damping system, as well as its transportation. Additionally, it protects the container from damage due to impacts during transportation or during storage, as well as exposure to weather and environmental conditions.

According to a second aspect of the invention, the object is achieved by a method for damping a movement of a tower of a wind turbine. The method comprises:
- providing a damping system according to the first aspect of the invention, wherein the damping system comprises a sensing device for sensing a movement of the tower, wherein the controlling device is configured for controlling the pulling device with respect to the sensed movement of the tower,
- attaching the string to the tower,
- sensing a movement of the tower by the sensing device, and
- operating the pulling device by the controlling device for providing a defined pulling force onto the string with respect to the sensed movement.

Firstly, the damping system according to the first aspect of the invention is provided. The damping system comprises the string, the pulling device, the controlling device, and the sensing device for sensing the movement of the tower. The controlling device is configured to control the pulling device with respect to the sensed movement of the tower. With this preferred embodiment of the damping system, the damping force can be better adjusted to the movement of the tower.

Subsequently, the string is attached to the tower. Preferably, the string is wound around the tower and tightened such that a height of the connection of the string at the tower is kept at a constant level.

Then, the movement of the tower is sensed by the sensing device. For this purpose, it is preferred that the sensing device is arranged at the tower, especially at a location higher than the attachment of the string. A relatively high attachment of the sensing device has the advantage that the sensed movement is relatively high as well, because the movement of the tower usually increases from the bottom segment to the top segment of the tower. As a movement, e.g. a movement speed and/or a movement acceleration, can be sensed.

The controlling device then operates the pulling device based on the sensed movement to provide the defined pulling force. The pulling force is preferably provided such that, when the tower approaches the string, a comparatively low pulling force is provided to just tighten the string, and when the tower moves away from the string, a comparatively high pulling force is provided to actively reduce the movement of the tower. Moreover, it is preferred that the defined pulling force is provided with respect to a predicted movement of the tower in order to improve the damping action on the tower movement.

The method for damping a movement of a tower of a wind turbine according to the second aspect of the invention has all the advantages that have already been described for a damping system for damping a movement of a tower of a wind turbine according to the first aspect of the invention. Accordingly, the method according to the invention has the advantage over conventional methods that, in a simple and inexpensive way, the movement of a tower of a wind turbine can be dampened. Thus, the installation time for components of the wind turbine, such as a nacelle to the tower, rotor blades to the hub or the like, can be reduced because, due to the reduced movement of the tower, alignment process times can be shortened. This has the further advantage that usage times of expensive auxiliary vehicles, such as crane vessels, can be reduced and costs can be saved.

Particularly preferred, the string is attached to a mid-section of the tower in a way that the string is located outside the limits of a rotor blade mounted to the wind turbine. The height where the string is attached to the tower is denoted attachment height. It is further preferred that the attachment height is as high as possible and outside the limits of the rotor blade to improve the impact of the pulling device onto the movement of the tower. This has the advantage that in a simple and inexpensive way, the movement of the tower can be dampened without risking a collision of the rotor blades with the string.

It is preferred, according to the invention, that the sensing device is arranged to sense the movement of a top-section of the tower. Naturally, the movement of the tower at the top end of the tower is the highest movement of the tower. Therefore, sensing the movement in this area, at the top end or near the top end, is useful for sensing the movement of the tower very reliably and accurately. This has the advantage that in a simple and inexpensive way, the damping of the movement of the tower can be further improved.

Further advantages, features, and details of the invention unfold from the following description, in which, by reference to drawings, working examples of the present invention are described in detail. Therefore, the features from the claims as well as the features mentioned in the description can be essential for the invention, as taken alone or in an arbitrary combination. In the drawings:
- Figure 1: shows a schematic side view of a tower of a wind turbine with a damping system according to a preferred embodiment of the invention,
- Figure 2: shows a schematic constructional view of a hydraulic pulling system of a damping system according to a preferred embodiment of the invention, and
- Figure 3: shows a schematic process chart of a method according to a preferred embodiment of the invention, and
- Figure 4: shows a schematic constructional view of a tower of a wind turbine with a damping system according to a preferred embodiment of the invention, and
- Figure 5: shows a top view of a damping system according to a preferred embodiment of the invention, and
- Figure 6: shows a schematic constructional view of a tower of a wind turbine with a damping system within a container according to a preferred embodiment of the invention, and
- Figure 7: shows a schematic constructional view of a tower of a wind turbine with a damping system in a jacked-up vessel according to a preferred embodiment of the invention.

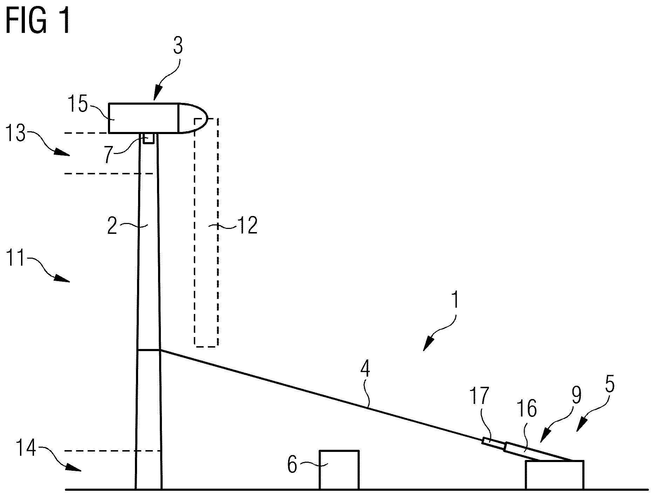

Elements with the same function and effectiveness are denoted in figures 1 to 3 with the same reference numbers.

In fig. 1, a tower 2 of a wind turbine 3 with a damping system 1 according to a preferred embodiment of the invention is shown in a schematic side view. The tower 2 comprises a bottom-section 14, a mid-section 11, arranged on top of the bottom-section 14, and a top-section 13, arranged on top of the mid-section 11. On the top of the top-section 13, a nacelle 15 is located. The wind turbine 3 is in a state of landing and has not shown rotor blades. When assembled, the down-facing rotor blades are moveable within predefined limits 12.

The damping system 1 comprises a string 4, attached with one end to the mid-section 11 of the tower 2. The other end of the string 4 is attached to a hydraulic piston 17 of a hydraulic pulling system 9 of a pulling device 5 of the damping system 1. The hydraulic piston 17 is partly encompassed by a hydraulic cylinder 16 of the hydraulic pulling system 9. The string 4 is attached to the tower 2 in a way that the string 4 is outside the limits 12 of the rotor blade. On the top of the top-section 13 of the tower 2, a sensing device 7 of the damping system 1 is located. For controlling the pulling device 5, the damping system 1 further comprises a controlling device 6.

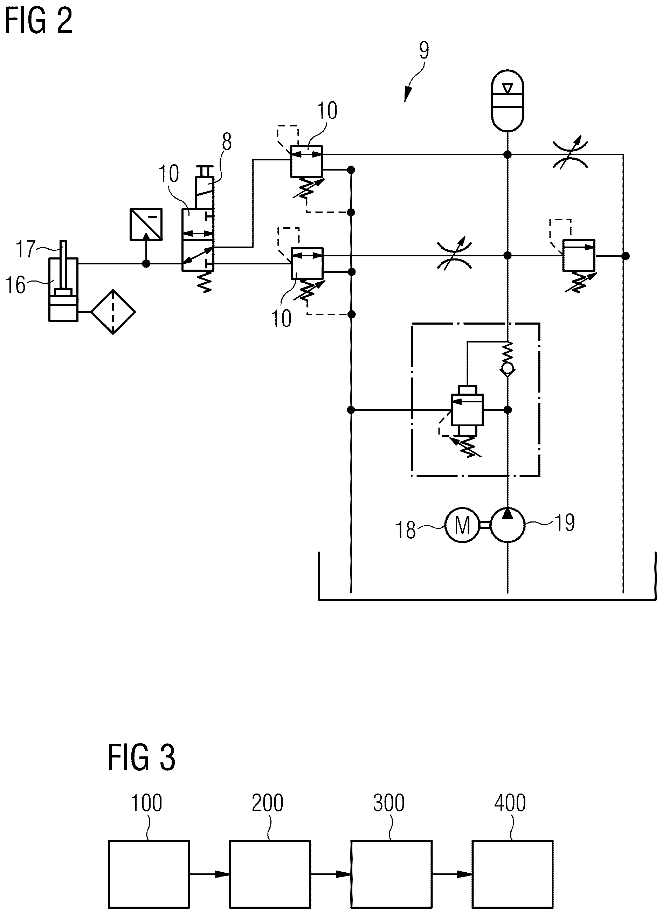

In fig. 2, a hydraulic pulling system 9 of a damping system 1 according to a preferred embodiment of the invention is shown in a schematic constructional view. The hydraulic pulling system 9 comprises a hydraulic motor 18 for operating a hydraulic pump 19 for providing hydraulic pressure. The hydraulic pulling system 9 further comprises a two-way valve 10, operated by a relay 8. The relay 8 can be connected to the sensing device 7. The hydraulic pulling system 9 further comprises a valve 10 for a low-pressure circuit and a valve 10 for a high-pressure circuit. Moreover, in this drawing, the hydraulic cylinder 16 and the hydraulic piston 17 are shown.

In fig. 3, a method according to a preferred embodiment of the invention is shown in a schematic process chart. In a first step 100, a damping system 1 according to the invention is provided. In a second step 200, the string 4 of the damping system 1 is attached to the tower 2, preferably to the mid-section 11 of the tower 2.

In a third step 300, a movement of the tower 2 is sensed by the sensing device 7 of the damping system 1. In a fourth step 400, the controlling device 6 operates the pulling device 5 for providing a defined pulling force onto the string 4 with respect to the sensed movement.

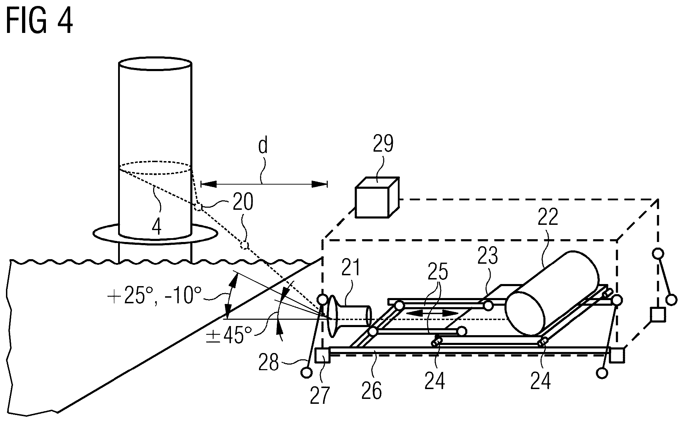

In fig. 4 the damping system for damping a movement of a tower (2) comprises at least one string (4) that are joined with connection means (20) before being introduced to the damping system through a guiding means (21) and finally attached to a winch (22). The winch (22) is attached to a translational movable sliding means (23) that rests on rollers (24). At least one hydraulic cylinder (25) is mounted on the winch (22) and a main frame (26) is connected to the translational sliding means (24) to the main frame (26) of the structure. The main frame (26) finally transfers the load through the fastening means (27) to the ship deck or the ground. In addition, tensioning means (28) are utilized to attach the container to the ship deck or the ground, thereby reducing the loading on the corner castings of the container A distance d is maintained between the tower and the ship deck or the ground. The string (4) is long enough to connect the tower with the damping system and keeping the distance d between the tower and the ship deck or the ground.

The damping system is placed within a container (dashed lines), which may be restructured to contain the damping system. The container may have a size of 20" feet.

The damping system operates at various tower positions relative to the installation vessel. The horizontal range is ±45° and the vertical range is -10°/+25°. The at least one hydraulic cylinder (25) may be restrained by hydraulic valves that create a pressure on each cylinder yielding a damping force. More specifically, the hydraulic valves may create a pressure equal to 20 tons on each cylinder yielding a maximum 40 tons damping force and a total of 10 tons as a minimum damping force. The winch (22) may be equipped with a mechanical brake, which may have 50 tons of capacity allowing the sliding means (23) to translate during operation. In the accidental case of load exceedance, the brake may be released allowing the sliding means (23) to translate freely effectively removing any tower damping thus unloading the damping system.

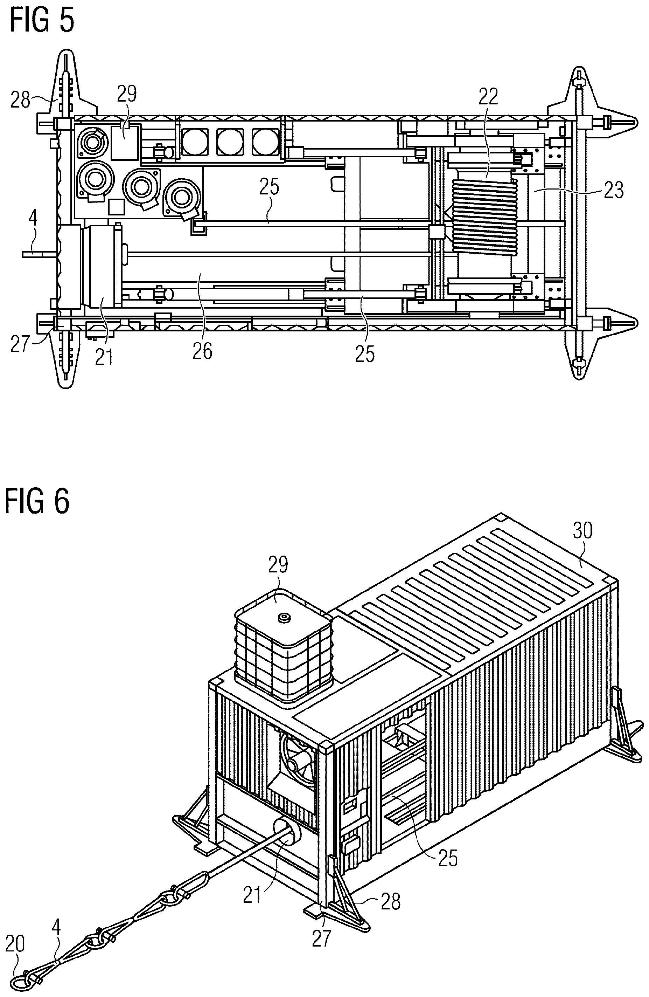

In fig. 5 shows a top view of a damping system. The string (4) is introduced into the damping system within the container through the guiding means (21), e.g. a fairlead. The string (4) is attached to the winch (22). The winch (22) is able to quickly pull in several meters of string (4), and the large pull forces of the string (4) are easily done by the hydraulic cylinders (25) when the string (4) is kept tight by the winch (4).

The control of the damping system may be done by a controller (not shown) and may have tower acceleration, tower strains, vision system of tower position or similar signals of the tower movements as input and outputs. Additionally, it may have a control signal so that the winch (22) may be able to pull the string (4) tight, e.g. by activating an electrical relay providing electrical power to the motor of the winch (22), and to the hydraulic actuators, e.g. by activating a hydraulic valve in a hydraulic system driven by a motor-pump unit, for moving the sliding means (23) forwards or backwards. The winch (22) may alternatively be hydraulic driven and thereby activated by an input signal to a hydraulic valve.

In fig.6 a schematic constructional view of the damping system within a container is shown. At least one string (4) that is joined with connection means (20) is introduced into the container through the guiding means (21). The container comprises a hole and the guiding means (21) are placed there, thereby allowing the introduction of the string (4) within the container.

The main frame transfers the load through the fastening means (27) to the ship deck or the ground. The tensioning means (28) are utilized to reduce loading on the corner castings of the container. The tensioning means (28) may be turnbuckles.

The water tank (29) is placed on top of the container. The controller further activates a valve and/or a pump to ensure that water from the water tank (29) is running through the guiding means (21) and thereby cooling the string (4) due to the friction between the guiding means (21) and the string (4) during the pulling of the string (4).

The water may be collected in a second tank (not shown) and pumped back to the water tank (29). The water tank (29) may be provided with a cooler to cool the water returning to the water tank (29). Alternatively, instead of collecting the water and pumping it back to the water tank (29) water may be pumped directly from the sea to the water tank (29). In that way cooling of the water may be avoided depending on the sea water temperature.

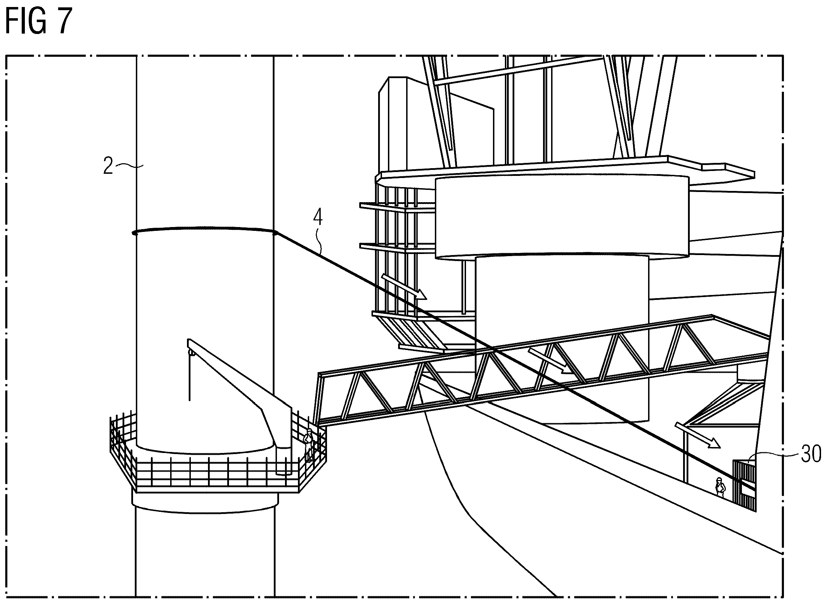

In fig. 7 shows a schematic constructional view of a tower of a wind turbine with a damping system in a jacked-up vessel. A tower (2) of a wind turbine is connected from the installation vessel to the damping system through the string (4) and the damping system is placed in the jack-up vessel within a container. The damping system is provided by having a higher tension in the string (4) as the tower (2) oscillates away from the vessel whilst reducing the tension as the tower (2) may be moved towards the vessel.

## Claims

1. Damping system (1) for damping a movement of a tower (2) of a wind turbine (3), comprising a string (4) for being attached to the tower (2) for applying a pulling force to the tower (2),
**characterized in,**
**that** the damping system (1) further comprises a pulling device (5) for providing a defined pulling force onto the string (4) and a controlling device (6) for controlling the pulling device (5), wherein the string (4) is configured to be attached to a mid-section of the tower (2) in such a way that the string (4) is located outside the limits of a rotor blade mounted to the wind turbine (3).

2. Damping system (1) according to claim 1,
**characterized in,**
**that** the pulling device (5) comprises a hydraulic pulling system (9) for providing the pulling force.

3. Damping system (1) according to claim 2,
**characterized in,**
**that** the damping system (1) further comprising:- a winch (22) attached to a translational movable sliding means (23),
- at least one hydraulic cylinder (25) mounted on the winch (22),
- a main frame (26) connected to the translational sliding means (24), and
wherein the main frame (26) is configured to transfer the load through fastening means (27) to the vessel deck or the ground.

4. Damping system (1) according to any of the previous claims,
**characterized in,**
**that** the at least one string (4) is configured to be introduced to the damping system (1) through guiding means (21).

5. Damping system (1) according to any of the previous claims,
**characterized in,**
**that** the damping system (1) is placed within a container.

6. Damping system (1) according to claim 5,
**characterized in,**
**that** the damping system (1) further comprising a tensioning means (28) configured to attach the container to the vessel deck or to the ground.

7. Damping system (1) according to any of the previous claims,
**characterized in,**
**that** the damping system (1) further comprising a water tank (29).

8. Damping system (1) to any of the previous claims, **characterized in,**
**that** the damping system (1) comprises a sensing device (7) for sensing a movement of the tower (2), wherein the controlling device (6) is configured for controlling the pulling device (5) with respect to the sensed movement of the tower (2).

9. Damping system (1) according to claim 8,
**characterized in,**
**that** the sensing device (7) is configured for sensing an acceleration of the tower (2), wherein the controlling device (6) is configured for controlling the pulling device (5) with respect to the sensed acceleration of the tower (2).

10. Damping system (1) according to claim 8 or 9, **characterized in,**
**that** the damping system (1) further comprises a relay (8), wherein the controlling device (6) is configured for operating the relay (8) with respect to the sensed movement of the tower (2).

11. Damping system (1) according to claim 10,
**characterized in,**
**that** the controlling device (6) is configured for operating the relay (8) with respect to a predicted movement of the tower (2) based on the sensed movement of the tower (2).

12. Damping system (1) according to the previous claims, **characterized in,**
**that** the relay (8) is connected to at least one valve (10) for operating the hydraulic pulling system (9).

13. Damping system (1) according to any of the previous claims,
**characterized in,**
**that** the tower (2) is connected from the installation vessel or the ground through at least one string (4), and wherein the damping movement of the damping system (1) is such that the at least one string (4) presents a higher tension when the tower (2) oscillates away from the vessel or ground and a reduced tension when the tower (2) moves towards the vessel or ground.

14. Wind turbine tower (2) comprising a damping system (1) according to any of the previous claims.

15. Method for damping a movement of a tower (2) of a wind turbine (3), comprising:
- providing a damping system (1) according to any of the previous claims, wherein the damping system (1) comprises a sensing device (7) for sensing a movement of the tower (2), wherein the controlling device (6) is configured for controlling the pulling device (5) with respect to the sensed movement of the tower (2),
- attaching the string (4) to the tower (2), such that the string (4) is attached to a mid-section (11) of the tower (2) in a way that the string (4) is located outside the limits (12) of a rotor blade mounted to the wind turbine (3);
- sensing a movement of the tower (2) by the sensing device (7), and
- operating the pulling device (5) by the controlling device (6) for providing a defined pulling force onto the string (4) with respect to the sensed movement.

16. Method according to claim 15,
**characterized in,**
**that** the sensing device (7) is arranged to sense the movement of a top-section (13) of the tower (2).
